# DEMANDE DE BREVET EUROPEEN

(11) **EP 1 452 609 A1**
(43) Date de publication de la demande: **01.09.2004**
(21) Numéro de dépôt: 04447019.3
(22) Date de dépôt: 26.01.2004
(51) Int. Cl.: C21C 5/46, G01N 21/71

(54) **Procédé de contrôle dynamique du traitement d'un métal en fusion**

(30) Priorité: 27.02.2003 BE 200300131
(71) Demandeur: Centre de Recherches Metallurgiques - Centrum voor de Research in de Metallurgie, 1200 Bruxelles (BE)
(72) Inventeur: Tusset, Vittorino, 4680 Oupeye (BE); Marique, Christian, 4042 Liers (BE)
(74) Mandataire: Van Malderen, Michel

(57) **Abrégé**

La présente invention se rapporte à un procédé de contrôle dynamique de l'état d'avancement du traitement d'un bain de métal en fusion, sis dans un récipient métallurgique sous forme d'une masse non homogène en fusion, contenant au moins une phase composée de métal et une phase composée de laitier, dans lequel on procède préalablement à une opération d'étalonnage d'un équipement de dosage analytique, tel qu'un spectromètre muni d'un système LIBS, on prélève ensuite un échantillon multiphase, c'est-à-dire composé de la masse non homogène précitée et contenant au moins du métal et un laitier, et on soumet ledit laitier à une analyse au moyen de l'équipement précité. On traite les résultats obtenus pour contrôler l'état d'avancement du traitement en cours dans le récipient métallurgique précité et aussi la composition chimique du métal traité.
On mesure la température du bain dans la même opération que l'échantillonnage. On analyse d'abord la teneur en CaO et en SiO2 dans l'échantillon, on détermine ensuite la teneur en Fe, C, P, S et on tient compte des résultats obtenus pour le CaO et SiO2 pour corriger les teneurs en Fe, C, P, S obtenues précédemment.

## Description

### Objet de l'invention

La présente invention se rapporte à un procédé de contrôle dynamique du traitement d'un métal en fusion, plus particulièrement d'un bain fonte et acier subissant une opération d'affinage.

L'invention se rapporte aussi à un nouveau procédé d'analyse simultanée d'un échantillon constitué principalement de laitier et de fer, ledit nouveau procédé d'analyse faisant partie intégrante du procédé de contrôle dynamique, objet de la présente invention.

La présente invention permet de mieux contrôler l'évolution chimique de la masse métallique en fusion traitée et ce sans exiger des temps d'arrêt du traitement contraires à une marche performante dudit traitement d'un métal en fusion avec en plus une précision meilleure au niveau de la composition et de la température du bain.

L'invention se rapporte également à un dispositif pour la mise en oeuvre du procédé de contrôle dynamique.

### Domaine d'application et état de la technique

Le domaine d'application préférentiel de l'invention est la sidérurgie.

A l'heure actuelle, la filière dite intégrée de production d'acier brut est la plus importante en matière de quantité traitée. Cette filière intégrée répond à un schéma mettant en oeuvre successivement le four à coke, la ligne d'agglomération, le haut-fourneau et enfin le convertisseur à oxygène, ce dernier étant suivi généralement d'une opération de coulée en continu. En outre, d'autres opérations sont aussi effectuées sur le bain métallique et peuvent prendre place dans ledit schéma. On peut y mentionner à titre d'exemple un dégazage, un ajout d'éléments d'alliage tels qu'opérés dans la poche de transfert du métal entre le convertisseur et la machine de coulée en continu.

Tout gain de productivité, à quelque niveau de la filière que ce soit, est toujours recherché dans le schéma global précité, la notion de suivi et de contrôle de la composition du métal en fusion est une information primordiale en vue de conduire et mener à bien les différentes opérations précitées, tant au niveau de l'élaboration en aciérie qu'en traitement en poche ou même lors de séquences de coulée en continu. Dans le cadre de l'aciérie, le suivi du procédé au convertisseur à oxygène exige le prélèvement régulier d'échantillons, leur analyse et le retour des résultats obtenus soit pour poursuivre l'opération d'affinage, soit pour procéder à la coulée du métal si la fin de la phase de traitement est atteinte. Les opérations précitées de prise d'échantillons, analyse et appropriation des paramètres de contrôle pour la poursuite dudit traitement, exigent à l'heure actuelle qu'on ralentisse le traitement d'affinage du métal en fusion ou même qu'on le stoppe, ce qui nuit à la productivité globale de l'opération d'affinage à l'oxygène. En effet, dans le cas précis du convertisseur à l'oxygène, la prise d'échantillons implique notamment l'arrêt ou la modification des conditions du soufflage à l'oxygène, le retrait de la ou des lances en cause, le basculement du convertisseur proprement dit, etc ... et a parfois pour conséquence, lorsque la qualité visée pour le métal n'est pas atteinte, la mise en oeuvre d'une ou de plusieurs phases de correction de la masse en fusion, telles que le réamorçage de l'arc électrique dans un four électrique ou un ressoufflage d'O2 dans un convertisseur. Ces phases de correction allongent le temps de traitement et peuvent provoquer une dégradation de différents paramètres opératoires tels que le rendement métallique en fer, la tenue des réfractaires, ...

Le contrôle idéal implique la connaissance simultanée de la phase métallique et du laitier.

La technique actuelle de suivi de l'évolution de la composition chimique du métal en fusion lors de son traitement est essentiellement basée sur une prise d'échantillons à phase homogène, par exemple d'une part, prise d'un échantillon de laitier et d'autre part prise d'un échantillon de fer liquide. Les techniques actuelles mettent en oeuvre des opérations d'analyse séparée des deux phases (métal et laitier) par prises d'échantillons séparés et exigent que les échantillons soient les plus homogènes possible. Lesdits échantillons subissent séparément une opération d'analyse en vue de déterminer leur composition chimique respective. En outre, les temps nécessaires pour procéder aux analyses sont différents selon la phase considérée, à savoir de l'ordre de 3 minutes pour le métal et 15 minutes pour le laitier. Comme les opérations précitées de prise d'échantillons, analyse chimique de ces derniers et interprétation des résultats sont présentes dans pratiquement toutes les étapes constituant la filière intégrée de production d'acier, et même de coulée de ce dernier, il est clair que toute diminution de la durée allouée à la prise des échantillons et à leur analyse est la bienvenue et a une influence favorable immédiate sur la productivité de ladite filière intégrée et permet une meilleure précision de contrôle et des phases de corrections réduites.

### Buts de l'invention

Le procédé de contrôle dynamique du traitement d'un métal en fusion, objet de la présente invention, implique une méthode d'échantillonnage et d'analyse de la composition du bain traité qui permet de réduire sensiblement les temps nécessaires à leur exécution. Il s'en suit que les résultats d'analyse sont plus rapidement mis en oeuvre dans le suivi du traitement du métal fondu pour apporter les mesures correctives nécessaires avec pour effet une amélioration du rendement du traitement précité et une réduction globale du temps de traitement en minimisant ou même en supprimant les phases de correction.

### Présentation de l'invention

Conformément à la présente invention, un procédé de contrôle dynamique de l'état d'avancement du traitement d'un bain de métal en fusion, sis dans un récipient métallurgique sous forme d'une masse non homogène en fusion, contenant au moins une phase composée de métal et une phase composée de laitier, mettant en oeuvre une prise d'échantillon de la masse en fusion et une analyse chimique dudit échantillon ainsi qu'une utilisation des résultats de l'analyse chimique précitée pour gérer les conditions du traitement du métal en fusion précité, est essentiellement caractérisé en ce qu'on procède préalablement à une opération d'étalonnage d'un équipement de dosage analytique, préférentiellement un spectromètre à émission, préférentiellement encore un spectromètre muni d'un système d'excitation par laser, et d'une manière encore plus préférentielle d'un système LIBS, c'est-à-dire un appareil d'analyse permettant de déterminer la composition chimique des différentes phases, en ce qu'on prélève ensuite un échantillon multiphase, c'est-à-dire composé de la masse non homogène précitée et contenant au moins du métal et un laitier, en ce qu'on soumet ledit échantillon multiphase sans procéder à la séparation des phases métal et laitier à une analyse au moyen d'un équipement de dosage analytique tel que précité lors de l'opération d'étalonnage, en ce y compris ses formes préférentielles, et en ce qu'on traite les résultats obtenus pour contrôler l'état d'avancement du traitement en cours dans le récipient métallurgique précité et aussi la composition chimique du métal traité.

Suivant une modalité de mise en oeuvre du procédé de l'invention, on procède aussi à une mesure de la température du bain endéans les 2 minutes de prise de l'échantillon dans le récipient métallurgique. Préférentiellement la mesure de température est réalisée dans la même opération que l'échantillonnage.

La prise et l'analyse d'un échantillon multiphase tel que défini ci-dessus en lieu et place de prise d'échantillons homogènes et distincts tels que décrits précédemment constitue un progrès vers une méthode de mesure plus rapide, avec une meilleure précision et exigeant un nombre d'échantillons moindre pour que les résultats de leur analyse soient fiables et utilisables en production industrielle.

Suivant une modalité de mise en oeuvre du procédé, objet de la présente invention, on compare les résultats de l'analyse obtenus au moyen de l'équipement de dosage analytique avec les mesures correspondantes sises dans une référence et on en déduit (extrapole) l'état chimique et thermique du bain analysé.

A titre d'exemple, on peut schématiser l'opération précédente de traitement comme suit.

Il est habituel dans le cadre des opérations d'affinage, par exemple lors de l'affinage du fer au convertisseur, de suivre le déroulement de l'opération d'affinage en procédant à des mesures de différents paramètres, par exemple via l'analyse d'échantillons pour les concentrations en différents éléments ou par mesure directe pour la température, et de comparer lesdits paramètres aux valeurs d'un modèle, c'est-à-dire d'une modélisation de l'opération d'affinage pour certaines conditions (type de convertisseur, type de bain, ...).

Lors de la ou des premières mesures on choisit des fourchettes définies assez larges en pourcent relatif et si l'on constate qu'on est, après mesure, hors de la fourchette choisie, on "corrige" le modèle, c'est-à-dire qu'on reprend un modèle qui "colle" mieux ou est plus approprié aux valeurs mesurées au même moment du déroulement de l'opération en question. Eventuellement, un second jeu de mesures soit confirme le nouveau modèle et définit la suite des opérations d'affinage, soit l'infirme et on recommence l'opération d'appropriation jusqu'à l'obtention d'un modèle satisfaisant.

Dans le cadre d'un convertisseur BOF, le prélèvement de l'échantillon multiphase est réalisé à l'instant t - 5, c'est-à-dire 5 minutes avant le moment de la fin du soufflage t estimé par un modèle choisi qui gère l'opération d'affinage suivant la pratique usuelle. A t - 3 minutes, c'est-à-dire 3 minutes avant la fin du soufflage t, les résultats de dosage des éléments, par exemple Fe, C, P, S, réalisés sur l'échantillon multiphase sont disponibles. Ces valeurs de dosage sont comparées aux valeurs estimées par le modèle au moment de la mesure, c'est-à-dire à t - 5 minutes.

Si les valeurs mesurées sont en dehors des intervalles définis, c'est-à-dire si l'écart entre ces valeurs est inférieur à x (Fe), y (C), z (P), o (S) pourcent relatif, respectivement pour la concentration en Fe, C, P et S, aucune modification du processus n'est apportée.

Si l'écart est supérieur à x (Fe), y (C), z (P), o (S) , un système de calcul statistique recherche le modèle qui à t - 5 minutes fournit des concentrations estimées qui rendent l'écart entre la valeur estimée et la valeur mesurée inférieur à x, y, z, o pourcent relatif.

Le processus de l'opération d'affinage en cours est adapté au nouveau modèle. Les valeurs x, y, z, o seront adaptées, c'est-à-dire qu'on fera référence à un nouveau modèle qui doit mieux "coller" à la réalité opérationnelle au fur et à mesure de l'utilisation du procédé. Au départ les fourchettes de valeurs seront choisies en prenant x = 20 %, y = 20 %, z = 10 %, o = 5 %.

Suivant une modalité de mise en oeuvre du procédé, objet de la présente invention, on soumet l'échantillon multiphase à une première analyse par laser en opérant sur 20 à 120 zones prédéterminées et on en déduit la position par comparaison à l'étalonnage précité d'un certain nombre de volumes à analyser sur l'échantillon multiphase en cause pour que la mesure soit représentative de la composition chimique de chacune des phases et de leur répartition massique au sein de l'échantillon.

Cette procédure opératoire permet d'identifier les zones où la phase métallique est prépondérante d'une part et celles où la phase de laitier est prépondérante d'autre part.

Suivant une modalité préférentielle de mise en oeuvre du procédé, objet de la présente invention, on procède à une analyse mettant en oeuvre entre 80 et 120 zones et on en déduit la position respective des différentes phases, on calcule le rapport pondéral de la phase laitier à la phase métallique, on accepte la mesure comme valable si le rapport précité est inférieur à 20 % et, dans le cas contraire, on opère une nouvelle analyse de même type en choisissant un nombre de zones supérieur d'au moins 2 fois.

La modalité précédente permet un gain dé temps précieux tout en assurant aux mesures un niveau de fiabilité acceptable.

Suivant une autre modalité de mise en oeuvre préférentielle du procédé, objet de la présente invention, on détermine la teneur en CaO et SiO2 dans les zones analysées de l'échantillon multiphase pour identifier les zones laitier.

Suivant encore une autre modalité de mise en oeuvre préférentielle du procédé, objet de la présente invention, on analyse d'abord la teneur en CaO et en SiO2 dans l'échantillon multiphase, on détermine ensuite la teneur en Fe, P et on tient compte des résultats obtenus pour le CaO et SiO2 pour corriger les teneurs en Fe, P obtenues précédemment. Préférentiellement, on détermine la teneur en Fe, C, P, S et on tient compte des résultats obtenus pour le CaO et SiO2 pour corriger les teneurs en Fe, C, P, S obtenues précédemment.

Suivant encore une autre modalité de mise en oeuvre préférentielle du procédé, objet de la présente invention, on procède à la détermination des teneurs en Fe, C, P, S et on utilise ces mesures pour en déduire les conditions optimales de traitement du métal en fusion, préférentiellement ces dernières concernent soit l'un ou plusieurs des éléments suivants, à savoir le volume d'O2 encore nécessaire à souffler, le temps d'injection et de brassage du bain, l'addition de fluxants, l'addition de matières refroidissantes, et ce pour arriver à la qualité désirée dudit bain.

Le procédé de contrôle et la prise et analyse d'échantillons y utilisés permettent un gain certain dans le contexte de tous les procédés dont la conduite est liée à l'adaptation des conditions de travail en fonction de l'évolution de la composition chimique du métal traité, fer ou autre.

Les possibilités d'application sont fort nombreuses et ne se limitent pas uniquement aux traitements en aciérie mais aussi à tout procédé d'affinage en bain métallurgique tels que connus pour le Zn, Cu, Al.

## Revendications

1. Procédé de contrôle dynamique de l'état d'avancement du traitement d'un bain de métal en fusion, sis dans un récipient métallurgique sous forme d'une masse non homogène en fusion, contenant au moins une phase composée de métal et une phase composée de laitier, mettant en oeuvre une prise d'échantillon de la masse en fusion et une analyse chimique dudit échantillon ainsi qu'une utilisation des résultats de l'analyse chimique précitée pour gérer les conditions du traitement du métal en fusion précité, **caractérisé en ce qu'**on procède préalablement à une opération d'étalonnage d'un équipement de dosage analytique, **en ce qu'**on prélève ensuite un échantillon multiphase, c'est-à-dire composé de la masse non homogène précitée et contenant au moins du métal et un laitier, **en ce qu'**on soumet ledit échantillon multiphase sans procéder à la séparation des phases métal et laitier à une analyse au moyen dudit équipement de dosage analytique dans l'opération d'étalonnage précitée, et **en ce qu'**on traite les résultats obtenus pour contrôler l'état d'avancement du traitement en cours dans le récipient métallurgique précité et aussi la composition chimique du métal traité.

2. Procédé suivant la revendication 1, **caractérisé en ce que** l'équipement de dosage analytique est un spectromètre à émission.

3. Procédé suivant la revendication 2, **caractérisé en ce que** l'équipement de dosage analytique est un spectromètre muni d'un système d'excitation par laser.

4. Procédé suivant la revendication 3, **caractérisé en ce que** l'équipement de dosage analytique est un spectromètre muni d'un système LIBS.

5. Procédé suivant l'une ou l'autre des revendications 1 à 4, **caractérisé en ce qu'**on procède à une mesure de la température du bain endéans les 2 minutes de la prise de l'échantillon dans le récipient métallurgique.

6. Procédé suivant la revendication 5, **caractérisé en ce que** la mesure de température est réalisée dans la même opération que l'échantillonnage.

7. Procédé suivant une ou plusieurs des revendications 1 à 6, **caractérisé en ce qu'**on compare les résultats de l'analyse obtenus au moyen de l'équipement de dosage analytique, avec les mesures correspondantes sises dans une référence et **en ce qu'**on en déduit (extrapole) l'état chimique et thermique du bain analysé.

8. Procédé suivant une ou plusieurs des revendications 1 à 7, **caractérisé en ce qu'**on soumet l'échantillon multiphase à une première analyse par laser en opérant sur 20 à 120 zones prédéterminées et **en ce qu'**on en déduit la position par comparaison à l'étalonnage précité d'un certain nombre de volumes à analyser sur l'échantillon multiphase en cause pour que la mesure soit représentative de la composition chimique de chacune des phases et de leur répartition massique au sein de l'échantillon.

9. Procédé suivant la revendication 8, **caractérisé en ce qu'**on procède à une analyse mettant en oeuvre entre 80 et 120 zones et **en ce qu'**on en déduit la position respective des différentes phases, **en ce qu'**on calcule le rapport pondéral de la phase laitier à la phase métallique, **en ce qu'**on accepte la mesure comme valable si le rapport précité est inférieur à 20 % et, dans le cas contraire, **en ce qu'**on opère une nouvelle analyse de même type en choisissant un nombre de zones supérieur d'au moins 2 fois.

10. Procédé suivant les revendications 8 ou 9, **caractérisé en ce qu'**on détermine la teneur en CaO et SiO2 dans les zones analysées de l'échantillon multiphase pour identifier les zones laitier.

11. Procédé suivant l'une ou l'autre des revendications 8 à 10, **caractérisé en ce qu'**on analyse d'abord la teneur en CaO et en SiO2 dans l'échantillon multiphase, **en ce qu'**on détermine ensuite la teneur en Fe, P et **en ce qu'**on tient compte des résultats obtenus pour le CaO et SiO2 pour corriger les teneurs en Fe, P obtenues précédemment.

12. Procédé suivant l'une ou l'autre des revendications 8 à 11, **caractérisé en ce qu'**on détermine la teneur en Fe, C, P, S et on tient compte des résultats obtenus pour le CaO et SiO2 pour corriger les teneurs en Fe, C, P, S obtenues précédemment.

13. Procédé suivant une ou plusieurs des revendications 8 à 12, **caractérisé en ce qu'**on procède à la détermination des teneurs en Fe, C, P, S et **en ce qu'**on utilise ces mesures pour en déduire les conditions optimales de traitement du métal en fusion, et ce pour arriver à la qualité désirée dudit bain.

14. Procédé suivant la revendication 13, **caractérisé en ce qu'**on agit sur le volume d'O2 encore nécessaire à souffler pour arriver à la qualité désirée dudit bain.

15. Procédé suivant les revendications 13 ou 14, **caractérisé en ce qu'**on agit sur le temps d'injection et de brassage du bain pour arriver à la qualité désirée dudit bain.

16. Procédé suivant une ou plusieurs des revendications 13 à 15, **caractérisé en ce qu'**on agit sur l'addition de fluxants pour arriver à la qualité désirée dudit bain.

17. Procédé suivant une ou plusieurs des revendications 13 à 16, **caractérisé en ce qu'**on agit sur l'addition de matières refroidissantes pour arriver à la qualité désirée dudit bain.
